# EUROPEAN PATENT SPECIFICATION

(11) **EP 1 331 788 B1**
(45) Date of publication and mention of the grant of the patent: **16.07.2008**
(21) Application number: 02253031.5
(22) Date of filing: 30.04.2002
(51) Int. Cl.: H04L 29/06, H04L 29/12

(54) **Contents delivery network service method and system**
Verfahren und System zum Inhaltbereitstellungsnetzwerksdienst
Méthode et système de service en réseau de fourniture de contenu

(30) Priority: 29.01.2002 JP 2002020056
(43) Date of publication of application: 30.07.2003
(73) Proprietor: FUJITSU LIMITED, Kawasaki-shi, Kanagawa 211-8588 (JP)
(72) Inventor: Okada, Akihiro, Kawasaki-shi, Kanagawa 211-8588 (JP); Nakahara, Hiroyuki, Kawasaki-shi, Kanagawa 211-8588 (JP); Igarashi, Norihiko, Kawasaki-shi, Kanagawa 211-8588 (JP)
(74) Representative: Hitching, Peter Matthew

(56) References cited:
- WO-A-01/14990
- WO-A-01/39000
- WO-A-01/90911
- US-A- 6 151 631

## Description

The present invention relates to a contents delivery network service.

With the widespread use of Internet and Intranet, the frequency of the access to a center server soars, the service providing condition of the center server becomes poor, and the system facilities frequently go down. Additionally, broadband networks have also been widely used with various pictures and music popularly delivered, thereby causing a squeeze on relay bands in a network and poor performance.

To solve the above mentioned problems, the facilities of the center server and the bands of networks are to be boosted. However, in these cases, a large cost is required and inflicting a loss.

A user will not access again unless desired information is easily obtained. Therefore, to take appropriate measures against the problems, shared contents process servers (a mirror server, a cache server, and a splitter server (hereinafter referred to as a split/cache server)) are mounted in a position closer to users so that the network service of providing information from the split/cache server capable of providing information on the most convenient possible condition for the users can be realized. That is, the contents delivery network service has been realized.

There are the following conventional technologies.

### 1. Simple Cache System

Cache servers are simply delivered on the network side, the browser settings of a user PC are changed into cache and proxy settings for operation.

The problem with this system lies in that it is practically difficult (in operation and support) to change the settings of the user PC, and the frequency of the cache access becomes unstable. Additionally, no authentication or restrictions are placed, and no contents conditions can be set for the delivery.

### 2. Forced Connection Server Change System using L4 (layer 4) Switch

A layer 4 switch (L4 switch) is arranged at the line concentration point of a network, the IP address of an access server is set in the switch, and, when the connection is made, a connection is made to the splitter/cache server forcibly connected to the L4 switch.

The problem with this system lies in that it is necessary to change the settings of all L4 switches in the network each time a change is made to the configuration of a center server, there arises a trouble of the entire disconnection of the network due to a faulty L4 switch, etc., it is hard to place authentication, restrictions, etc.

### 3. System of arranging a cache server and a splitter which are assigned the same IP addresses

A forced connection is made to a server of each area when servers assigned the same IP addresses are arranged at line concentration points of a network, local routing is performed in the connected network, and a user specifies the IP address.

The problem with this system lies in that, as in 2. above, it is difficult to design the routing policy of an ISP (Internet service provider) network, thereby setting the network unstable because the entire settings are to be changed by adding a service on the center, etc. and the same IP addresses are assigned to a plurality of servers.

### 4. System of setting an access server from the AS number of an access ISP

When access is gained through a plurality of ISPs, the optimum server is selected from among the AS numbers of the ISPs, and the URL (universal resource locator) of the access server is returned by a DNS (domain naming system).

The problem with this system lies in that, depending on the network status in the ISP, the quality of service cannot be maintained, the effect of the network efficiency in the ISP, the reduction of bands cannot be obtained, etc.

The AS number refers to an autonomous system number (a unique system number assigned to an Internet business owner).

Each of the systems 1 ∼ 4 above lacks the function of checking the consistency of the bands among users and servers and the bands required by the contents.

Conventionally, the contents delivery service successfully reduces center server (original) facilities and switch line bands of a contents delivery network. However, there are the following problems.
1. The browser settings of a user PC are to be changed.
2. The optimum server cannot be automatically selected.
3. Contents delivery area conditions and delivery areas cannot be automatically checked.
4. An automatic band check cannot be carried out on a contents delivery speed condition and between a user and a server.
5. There are no measures to suppress the fault of the entire network induced by the fault of an added system such as a cache server.
6. A trouble notification from a user about a band and speed cannot be automatically checked by the center part through the network.
7. It is necessary to change a network during center server change and service change.

WO 01/14990 discloses a method for content delivery over the internet which allows digital content to be distributed and delivered on several servers located at various geographic locations. User requests from the home server are redirected to a server that can provide the best performance to that particular user.

WO 01/90911 discloses a method and system for directing requests for content to a content server based on network performance. The user's IP address is mapped to a particular content server based on a cost function and the IP address of the selected content server is provided to the user.

WO 01/39000 discloses a user device and system for traffic management and content distribution over a worldwide area network. Here, a system provides shared global traffic management and a shared content delivery network for a service fee. Content on a customer's origin site is replicated to web cache servers in the network.

It is desirable to provide a system capable of improving the convenience in offering a service by automatically distributing users to cache servers in the contents delivery network service.

The invention is defined in the independent claims, to which reference should now be made. Advantageous embodiments are set out in the sub claims.

According to the present invention, a user can automatically receive the contents from an appropriate splitter/cache server, thereby avoiding the concentration of loads on the server having the original contents. Since users can be automatically assigned in this process, a labor-saving process can be performed. Furthermore, since the splitter/cache server can be easily managed for use, the involved billing process can also be easily performed. Additionally, there is no necessity to boost the center server facilities or the bands of the network.

Preferred features of the present invention will now be described, purely by way of example, with reference to the accompanying drawings, in which:
FIG. 1 shows the configuration of the entire system of the contents delivery network (CDN) system to which an embodiment of the present invention applied;
FIG. 2 is a block diagram of the configuration of the contents delivery network (CDN) system to which an embodiment of the present invention applied;
FIG. 3 shows the sequence of the basic operations according to an embodiment of the present invention;
FIG. 4 shows a flow (1) of the processes according to an embodiment of the present invention;
FIG. 5 shows a flow (2) of the processes according to an embodiment of the present invention;
FIG. 6 shows a flow (3) of the processes according to an embodiment of the present invention;
FIG. 7 shows a flow (4) of the processes according to an embodiment of the present invention;
FIG. 8 shows a flow (5) of the processes according to an embodiment of the present invention;
FIG. 9 shows a flow (6) of the processes according to an embodiment of the present invention;
FIG. 10 shows a flow (7) of the processes according to an embodiment of the present invention;
FIG. 11 shows a flow (8) of the processes according to an embodiment of the present invention;
FIG. 12 shows a flow (9) of the processes according to an embodiment of the present invention; and
FIG. 13 is a view of a hardware environment required when an embodiment of the present invention is realized by a program.

An embodiment of the present invention realizes a business in which the value added can be improved in a contents delivery network service, authentication, verification, etc. can be realized, and a billing process can depend on the usage.

The contents delivery network service aims at offering a large volume of software and streaming video contents to a user at a higher speed with good quality, reducing the necessary band used for a network, and also reducing the necessary center server facilities.

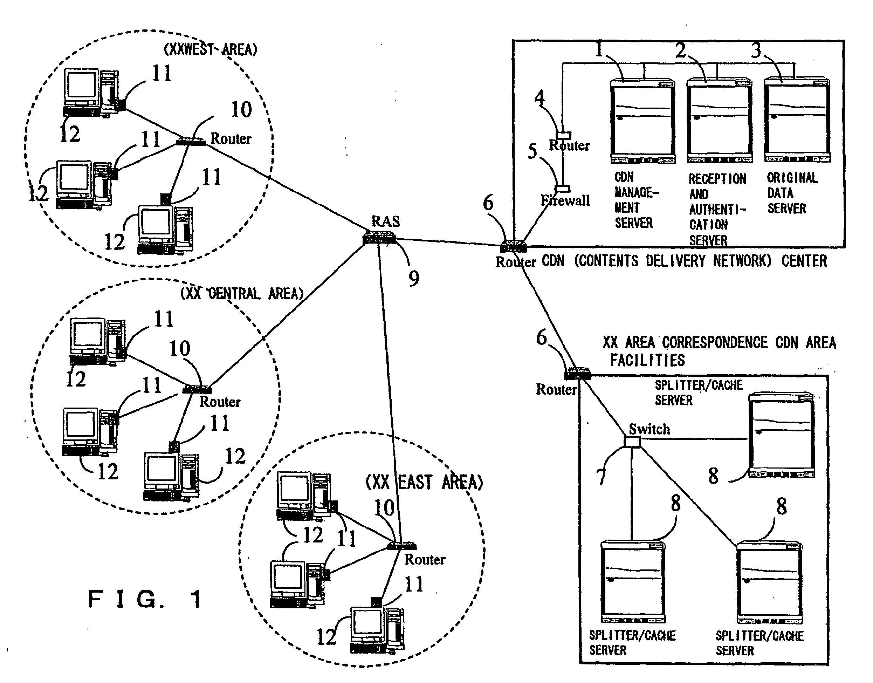

FIG. 1 shows the configuration of the entire system of the contents delivery (CDN) network to which an embodiment of the present invention is applied.

The CDN center comprises a CDN management server 1, a reception and authentication server 2, and an original server 3. These components are connected to a router 6 through a router 4 and a fire wall 5. The router 6 is connected to the router 6 of corresponding CDN area facilities in each area, and an RAS 9 for distributing communications to each area. The RAS 9 is connected to each router 10.

A user modem 11 is connected to the router 10 of each area, and a user PC 12 communicates with an external device through the user modem 11. The CDN area facilities corresponding to each area is connected to external devices through the router 6, and is configured to be connected to any splitter/cache server 8 through a switch 7.

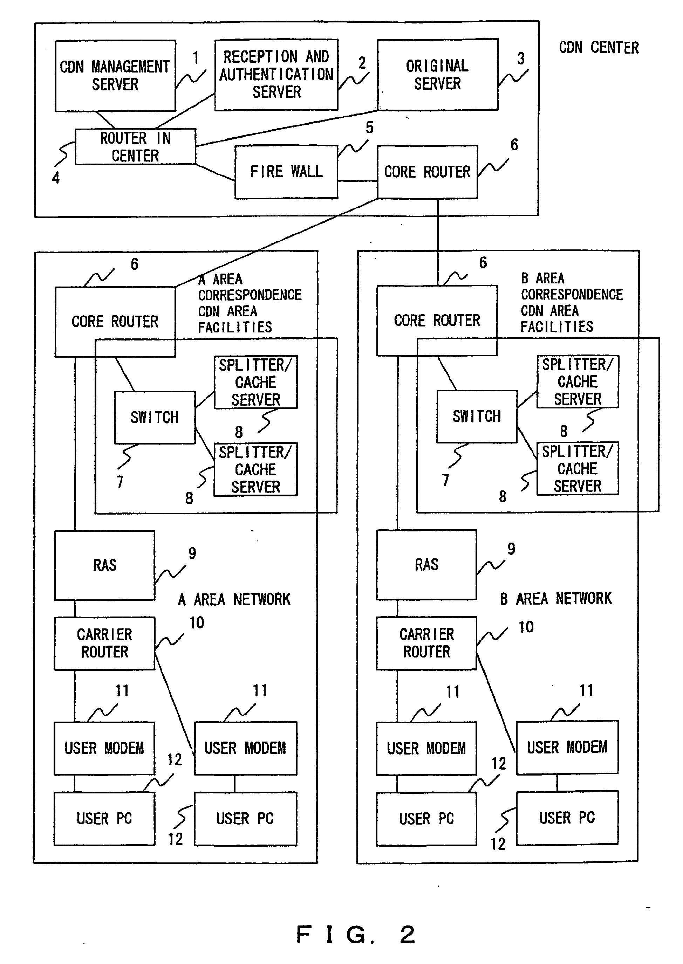

FIG. 2 is a block diagram of the configuration of the contents delivery (CDN) network to which an embodiment of the present invention is applied.

In FIG. 2, in the CDN center, the CDN management server 1 provided according to an embodiment of the present invention, the reception and authentication server 2 provided also according to the embodiment of the present invention, and the original server 3 storing the original contents are connected to the router 4 in the center for routing in the CDN center. The router 4 is connected to the core router 6 of the network of Internet, etc. through the fire wall 5 for maintaining the security in the CDN center against the external network access such as access through Internet, etc.

The CDN center is connected to the networks in the A and B areas through the core router 6 of Internet (including common networks). The network of each area includes, in addition to the CDN area facilities corresponding to the area A, and the CDN area facilities corresponding to the area B, the RAS (remote access server) 9 which is an authentication server for authenticating a user for a network connection, the carrier router 10 for a connection carrier, the user modem 11, and the user PC (normally a user terminal) 12.

The CDN area facilities corresponding to each area are provided with the switch 7 for connecting the splitter/cache server 8, and a cache server storing the contents of the original server 3 in a distributed manner, or a splitter server for branching and switching a streaming of the original server into plural pieces (hereinafter referred to as a splitter/cache server 8).

According to the present invention,
1) A domain name is assigned for designation of a service type, a carrier, an area name.
   That is, a specific IP address is assigned to a user of a network. The IP address can be assigned either fixedly or dynamically for each use by a communications equipment at an access point, etc. A unique domain name identifying the geographical position is assigned.
2) A network is provided with the cache server 8 or the splitter server 8 in each area in a position closest to the user, and a unique IP address and domain name are assigned to the server as described in 1) above.
3) The reception and authentication server 2 is provided with a use authentication function and an address returning function of the splitter/cache server 8 for issue and access using a contents authentication password.
4) The CDN (contents delivery network) management server 1 is provided with a function of storing a correspondence table between 1) and 2) as a database, and returning the address and the domain name of the splitter/cache server 8 arranged in the optimum network in response to an inquiry (user IP address or domain name) from the authenticating function of the center server.
5) The CDN management server 1 is provided with a function of automatically measuring the network band to the terminal of a user computer, etc., and returning a result in response to an inquiry from the reception and authentication server 2.
6) The CDN management server 1 is provided with a function of keeping track of the use and the operation of each splitter/cache server 8, returning the address of the splitter/cache server 8 having a smaller number of connections and a smaller load depending on the situation, thereby bypassing access.
7) The CDN management server 1 is provided with a function of measuring and managing a use system, a use frequency, a use frequency for each user of a server arranged in each network, a use rate, and a usage, and charging a user of a contents provider for a use rate.

In the contents delivery network according to an embodiment of the present invention, the IP address and network set-up information about a user is referenced, and the area of the user is automatically specified so that the contents can be delivered only when the contents delivery conditions (area and carrier) are satisfied.

The IP address of each network concentrator, and a domain name corresponding to the IP address are assigned an area name, etc., and IP addresses and domain names are also assigned to a cache server, a mirror server, and a splitter server according to the above mentioned concept. When a user accesses a center server, the table storing the user IP address and the setting information is referred to so that the source of the access can be determined. In addition, the contents management table (which defines a delivery area condition, etc. as described later), is also referenced in order to automatically determine the first server for delivery, and whether or not the delivery can be performed based on the contents conditions, Furthermore, it is automatically determined depending on the usage whether the access is to be assigned to an original server, a cache server, or a mirror server (determined according to the contents management table in the CDN management server).

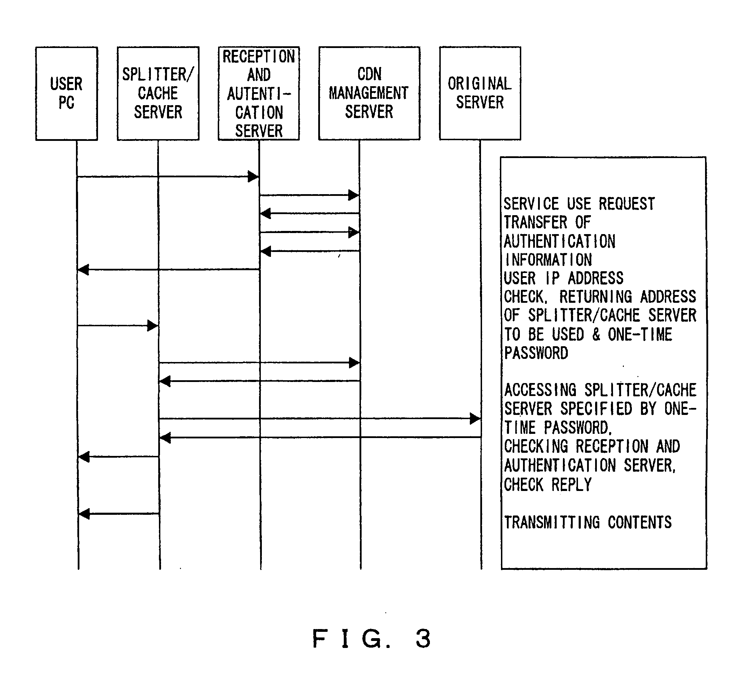

FIG. 3 shows a sequence of the basic operations according to an embodiment of the present invention.

First, a user accesses the reception and authentication server of the CDN center using his or her user PC, and issues a request for use of a service. The reception and authentication server transfers authentication information to the CDN management server, and the CDN management server checks the user IP address, and returns the address of a splitter/cache server to be used and a one-time password for reception of the service to the reception and authentication server. The reception and authentication server returns the information received from the CDN management server to the user PC.

The user PC accesses the specified splitter/cache server using the received one-time password. The access information is transmitted to the reception and authentication server, the reception and authentication server checks whether or not the access can be accepted, and returns the check result to the splitter/cache server, and the splitter/cache server transfers the result to the user PC.

After the access of the user PC to the splitter/cache server 8 is accepted, the splitter/cache server 8 transmits the contents to the user PC.

According to the embodiment of the present invention, an available band of a network path to the user is automatically computed, it is automatically determined whether or not the speed condition of the contents to be used is satisfied, and the contents are delivered only when the condition is satisfied.

That is, the band between the splitter/cache server to be specified for the user and the user PC is measured using the conventional band measuring technology and the user IP address, the result and the contents management table (defining the speed condition, etc. as described later) are referenced, and it is automatically determined whether or not the delivery can be performed based on the defined speed condition.

Also according to the present embodiment, the reception and authentication server automatically returns a one-time password and the address of the splitter/cache server to be accessed to the user PC, thereby limiting the access.

That is, when the contents can be delivered to the user PC according to a predetermined speed condition, etc., a contents authentication password for authentication in a contents unit is returned to the user to allow the user to access the splitter/cache server specified by the password. The splitter/cache server transmits the password to the reception and authentication server, and delivers the information to the user when an authentication reply is issued.

Furthermore, according to the present embodiment, when the user issues a claim for the speed, the source IP address of the PC (terminal) used by the user is obtained by allowing the user to access the CDN management server, and the bands of the user PC and the splitter/cache server in the network are automatically measured, thereby specifying unavailable portions.

That is, the user accesses the CDN management server, the bands are measured by the conventional band measuring technology for the user IP address, and it is determined based on the measurement result whether or not the network band can be satisfactory.

Then, the server (a splitter/cache server, or an original server) to be accessed based on the use and the user access state is automatically determined, and access is assigned by each use, thereby automatically distributing a load.

The CDN management server holds the use state management table of each server for management of the number of concurrent processes of a server, and a load is distributed by assigning the optimum server in area and load.

Then, a use rate is set based on the above mentioned configuration such that a different use rate can be charged depending on the level of the guarantee of the quality of the service of the same contents.

According to the above mentioned embodiment, no change is required on a network in cases of a contents delivery service, the reduction of center server (original server) facilities, the reduction of a switch line band of a contents delivery network, no setting change of a browser of a user PC, automatic selection of the optimum server, an automatic check of a contents delivery area condition and a delivery area, a contents delivery speed condition and an automatic band check between a user and a server, avoiding induction of an entire network fault by a fault of a system provided with a cache server, etc., an automatic band and speed check in a network, a change of a center server, and a change of a service.

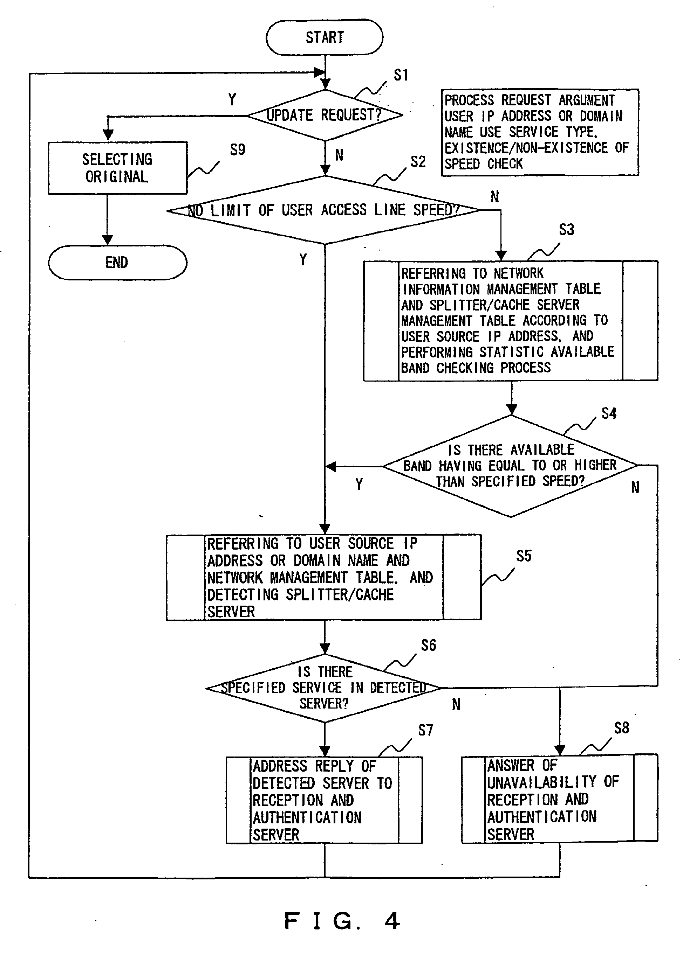

FIGS. 4 through 12 shows a flow of the processes according to an embodiment of the present invention.

FIG. 4 is a flowchart of the process of determining the serviceability of the CDN management server and assigning the optimum server.

First, in step S1, it is determined whether or not an update request has been received from a reception and authentication server. If not, control is passed to step S2. If an update request has been received, then control is passed to step S9, original data is selected, thereby terminating the process. Arguments to be used when a process is requested are a user IP address or a domain name, a user service type, and an existence/non-existence of a speed check.

In step S2, it is determined whether or not there is a request for a user access line speed check. If there is a line speed check request, then control is passed to step S3, the network information management table and the splitter/cache server management table are referenced using the user source IP address, and the process of checking a statistic available band of lines between the user and the splitter/cache server is performed by the conventional technology.

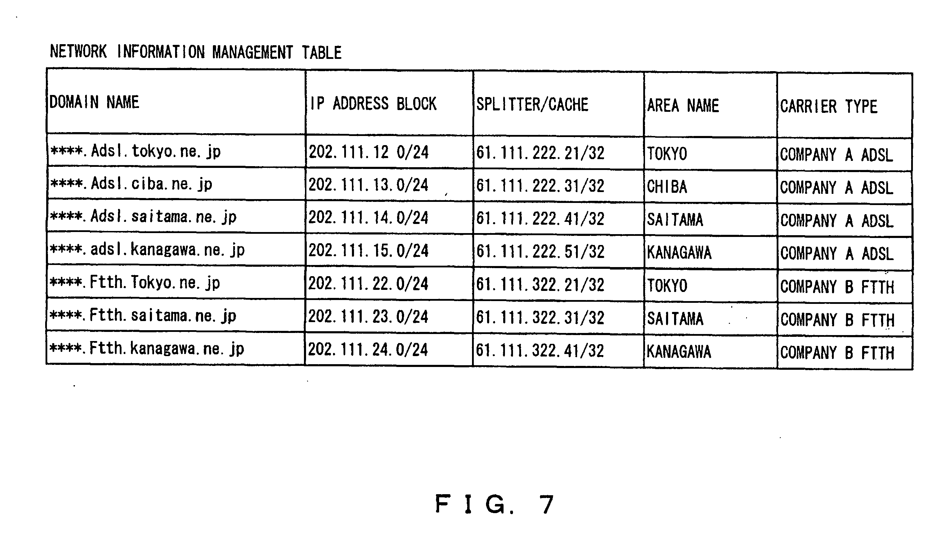

FIG. 7 shows an example of a network information management table.

As shown in FIG. 7, the IP address of the splitter/cache server geographically closer to the user PC, the name of the area, and a carrier type are described corresponding to the domain name of the user PC or an IP address block. Therefore, the CDN management server can specifies a splitter/cache server being used by the user PC by searching the table.

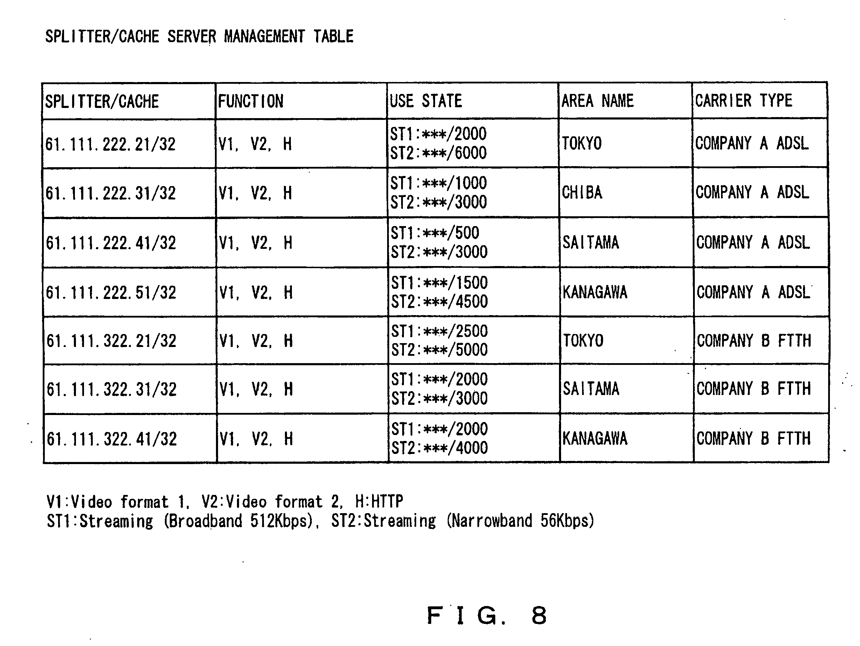

FIG. 8 shows an example of a splitter/cache server management table.

In FIG. 8, the IP address of the splitter/cache server, the function of the server, the use state, the area name, the carrier type are entered correspondingly.

Therefore, the CDN management server can determine whether or not there is an available band by checking the use state of the server on the table.

In step S3, when the band is completely checked, the contents management table is referenced in step S4, and it is determined whether or not there is an available band having a speed equal to or higher than a specified speed. If it is determined that there is an available band having the speed equal to or higher than the specified speed, then control is passed to step S5. If it is determined that there is not an available band having the speed equal to or higher than the specified speed, then control is passed to step 38.

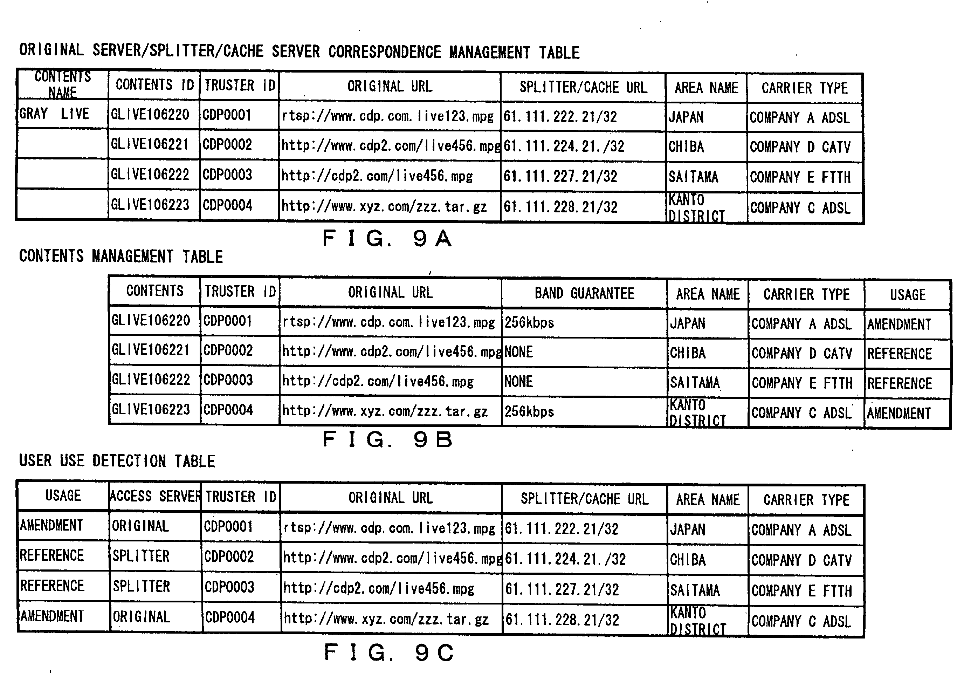

FIG. 9 shows an example of each table.

The original server/splitter/cache server correspondence management table shown in FIG. 9A stores a contents ID, a truster ID, an original URL, a splitter/cache URL, an area name, and a carrier type corresponding to the contents name.

In the contents management table shown in FIG. 9B has entries of an identification number indicative of contents, a commission ID which is an ID of an organization committing a service according to the present embodiment when the contents are provided, and an original URL which is an URL of the place where the contents of the original server are located. Corresponding to the above mentioned entries, the contents of the band guarantee of the service of respective contents, the name of an area to which a service is offered, a carrier type for which the contents are serviced, and a usage are entered. Therefore, the CDN management server can obtain the contents of the band guarantee to be maintained in the contents providing service, and it can be determined whether or not the contents of the guarantee are maintained by the comparison with the result of the band check process in step S3.

The user assignment table shown in FIG. 9C is a table for assignment of users, and has entries of an access server, a truster ID, an original URL, a splitter/cache URL, an area name, and a carrier type depending on the usage.

In step S8, since there is no available band having a speed equal to or higher than a specified speed for a reception and authentication server, an answer that the service cannot be offered is transmitted to the reception and authentication server, thereby returning control to step S1.

In step S2, if there is no line speed check request and if it is determined in step S4 that there is an available band equal to or higher than a specified speed, then control is passed to step S5. In step S5, a user source IP address or a domain name and a network management table are referenced, and a splitter/cache server is detected. In step S6, it is determined whether or not there is an available band for a specified service for the detected splitter/cache server by referring to the splitter/cache server management table.

If it is determined in step S6 that there is an available band, then control is passed to step S7, the address of the detected server is transmitted to the reception and authentication server, and control is returned to step S1. If it is determined in step S6 that there is no available band, then control is passed to step S8, the answer that the service cannot be offered is transmitted to the reception and authentication server, thereby returning control to step S1.

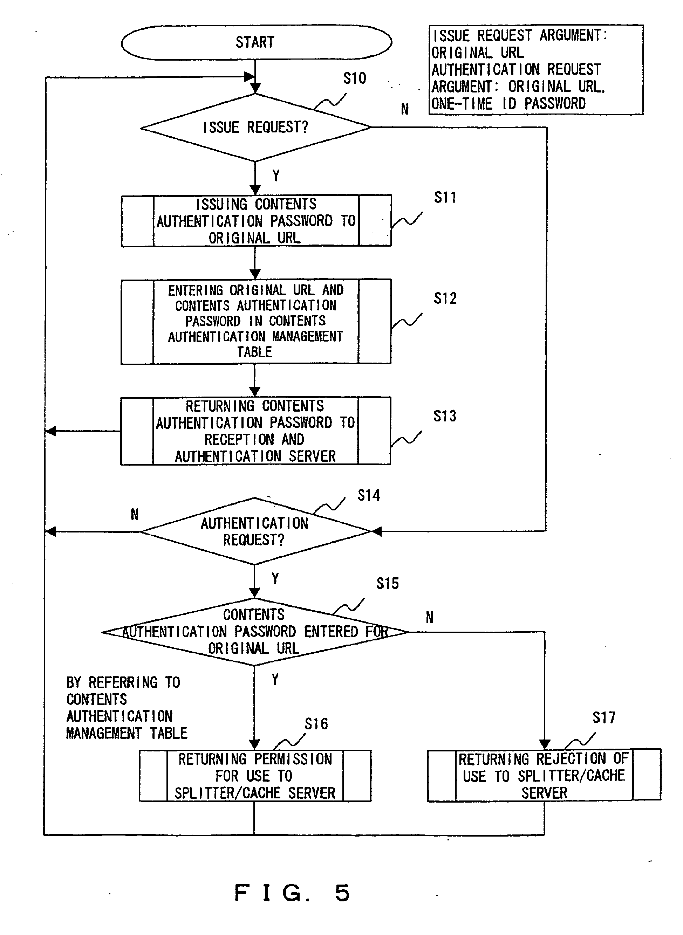

FIG. 5 is a flowchart of the process flow of issuing a contents authentication password of the CDN management server and authenticating the contents.

First, in step S10, it is determined whether or not the request from the user is a request to issue a contents authentication password. At this time, the argument of the issue request for a contents authentication password is the URL of the original server. If it is determined in step S10 that the request for a contents authentication password has been issued, then control is passed to step S11.

In step S11, the contents authentication password is issued for the original URL which is an URL of the original server, and a contents authentication password is issued. In step S12, the original URL, and the contents authentication password are entered in the contents authentication management table. Then, in step S13, the contents authentication password is returned to the reception and authentication server, and control is passed to step S10.

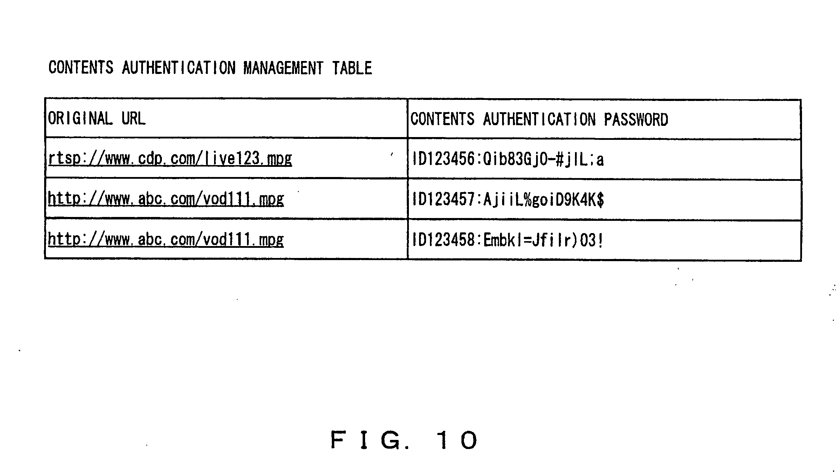

FIG. 10 shows an example of a contents authentication management table.

In the contents authentication management table, the original URL and the contents authentication password correspondingly issued are entered.

Then, if it is determined in step S10 that the request from the user is not a request to issue a contents authentication password, the determination is NO in step S10, and control is passed to step S14. In step S14, it is determined whether or not the request from the user is a request to authenticate the contents. It the determination in step S14 is NO, then control is returned to step S10. If the determination in step S14 is Yes, then control is passed to step S15.

It is determined in step S15 by referring to the contents authentication management table whether or not the contents authentication password has been entered for the original URL. If the determination in step S15 is YES, then control is passed to step S16, the permission for use is returned to the splitter/cache server, and control is returned to step S10. If the determination in step S15 is NO, then control is passed to step S17, a rejection answer is transmitted to the splitter/cache server, thereby returning control to step S10.

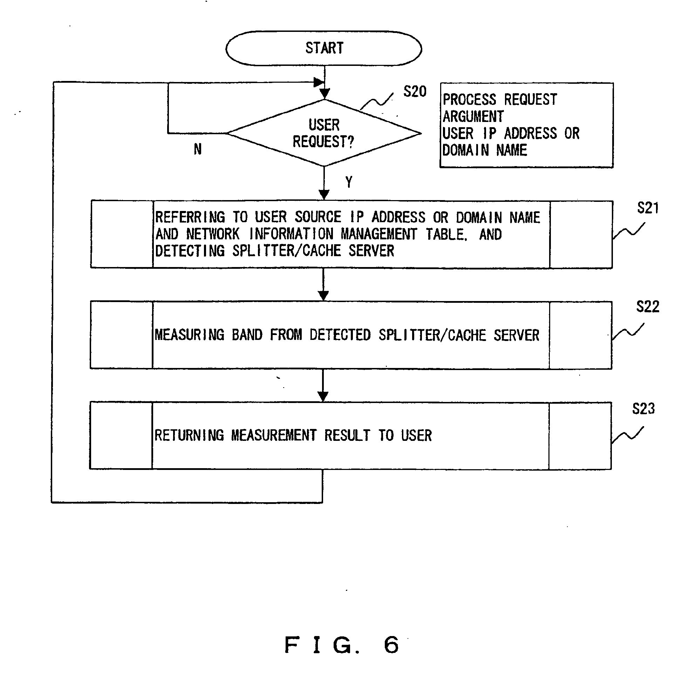

FIG. 6 is a flowchart of the process flow corresponding to the request to measure a band from the user to the CDN management server.

First, it is determined in step S20 whether or not a request to measure the band has been received from a user. The argument of the request to measure the band is a user IP address or a domain name.

If it is determined in step S20 that a request to measure the band has been received from the user, then the user IP address or the domain name and the network information management table (FIG. 7) are referenced in step S21, and a splitter/cache server is detected. Then, in step S22, the band is measured for the detected splitter/cache server. In step S23, the measurement result is transmitted to the user, thereby returning control to step S20.

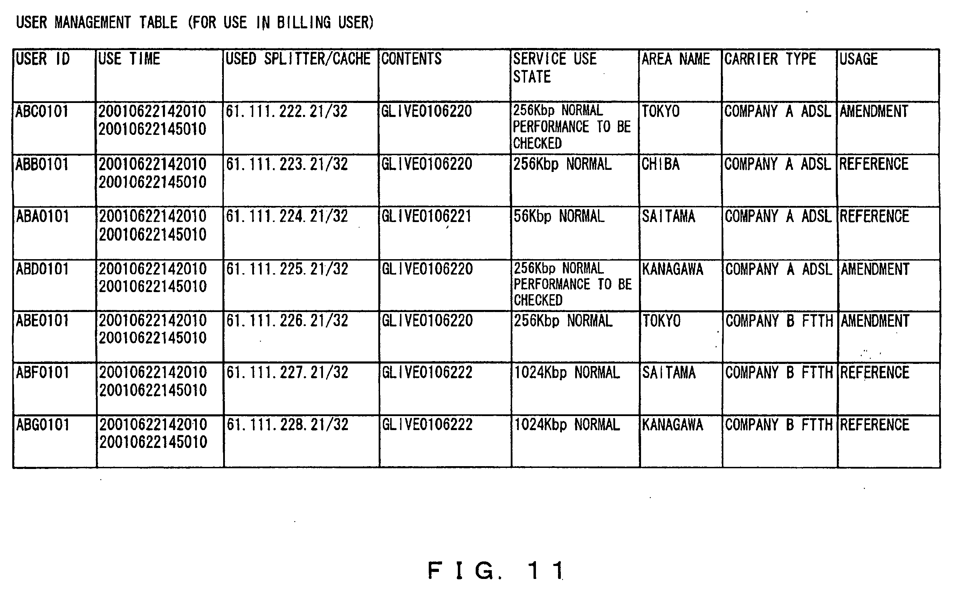

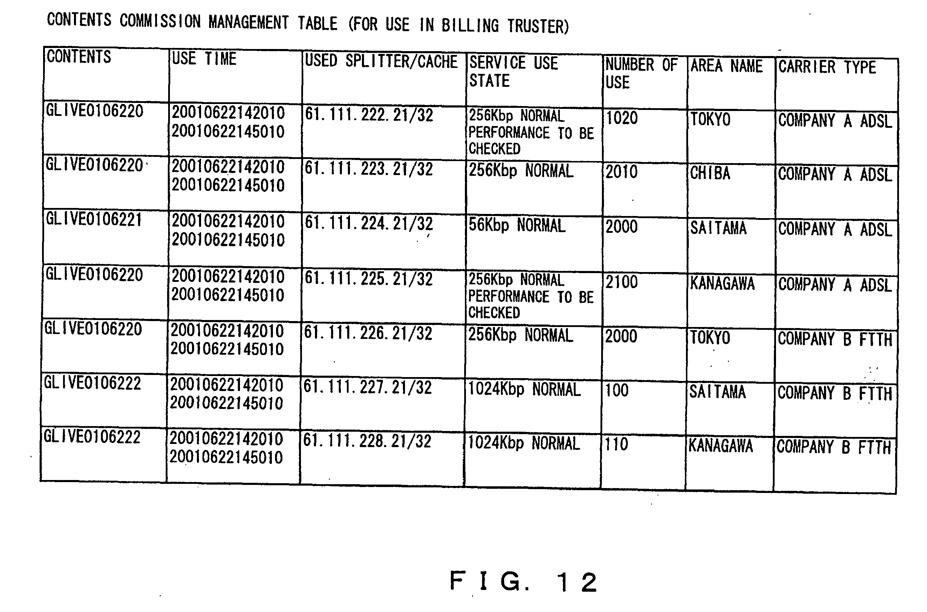

FIGS. 11 and 12 show examples of tables storing information held in the CDN management server for use in a billing process.

FIG. 11 shows an example of a user management table to be used in billing a user.

The user management table has entries of a user ID, a use time, the IP address of a splitter/cache server to be used, the identification number of the contents, the use state of a service, an area name, a carrier type, and a usage.

As an example of a method of billing a user, a use time is obtained according to the ID of the user, a use period is computed and multiplies by a price in unit time. Furthermore, the use rate of the splitter/cache server to be used and the use rate of the contents are added to the product. Then, it is determines whether or not a service use state is normal and whether or not the performance is to be checked. If the service use state is normal, then no discount is allowed. If the service state is not normal, then a predetermined rate of discount is allowed. If performance is to be checked, no discount is allowed. If performance is not to be checked a predetermined rate of discount is allowed. In consideration of the above mentioned options, the final billing amount is determined, and a notification is issued to the user.

The entry contents in the user management table can be obtained by the CDN management server monitoring the access of the user to the splitter/cache server.

FIG. 12 shows an example of a contents commission management table for use in billing a truster of a service which is a source of the contents to be used when the service provided according to the present embodiment is used by providing the contents.

The contents commission management table has entries of the identification number of the contents, a use time, the IP address of a splitter/cache server to be used, a service use state, the use counts, an area name, and a carrier type.

An example of a method of billing a truster can be, as in billing a user, computed by offering a discount based on the service use state on the sum of the price of the contents provided as a service from the system according to the present embodiment, the price obtained by multiplying the use period computed from a use time by the price in a unit time, the use rate of a used splitter/cache server, and the price obtained by multiplying the use counts by the use rate per service, and the truster is notified of the total amount billed.

According to the present embodiment, only the contents are provided but the service to be provided can include on-demand voice and images, live voice and images using a data stream, and data files to be downloaded.

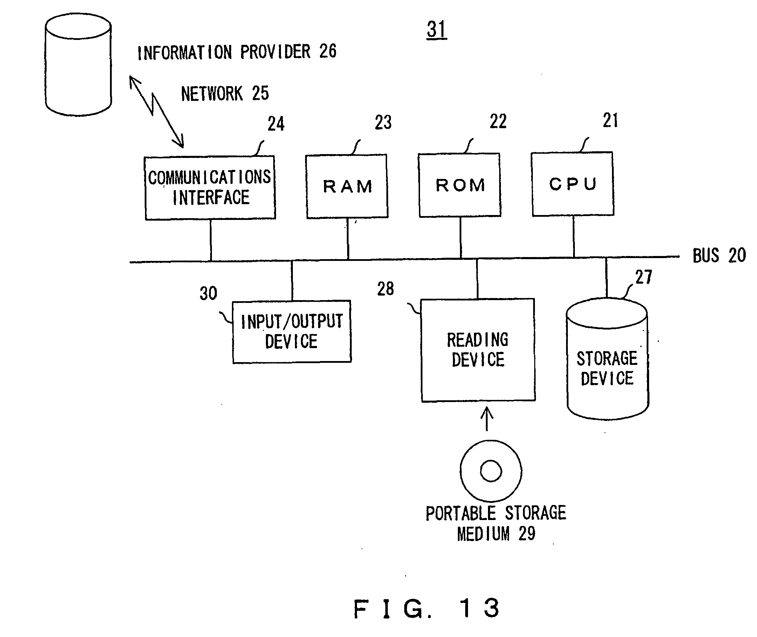

FIG. 13 shows a hardware environment required when the present embodiment is realized by a program.

The functions of the CDN management server, the reception and authentication server, etc. can be realized by an information processing device 31 executing a program.

A CPU 21 of the information processing device 31 is connected through a bus 20 to a storage device 27 such as a hard disk, etc. storing the program. The program stored in the storage device 27 is executed by the CPU 21 after being copied to RAM 23. ROM 22 stores a basic program such as BIOS, etc., and also stores the program to be executed by the CPU 21.

The program can also be stored in a portable storage medium 29 such as a flexible disk, CD-ROM, DVD, MO, etc. read by a reading device 28, installed in the information processing device 31, and executed by the CPU 21.

An input/output device 30 such as a keyboard, a mouse, a display, a template, etc. is used to transmitting an instruction from the user to the CPU 21, and to present the operation result of the CPU 21 to the user.

A communications interface 24 connects the information processing device 31 to an information provider 26 through a network 25. The program can also be downloaded from the information provider 26, and can be installed to the information processing device 31 for execution. Otherwise, the information provider 26 can hold the program, and executes the program in the network environment with the network connection maintained.

According to the present invention, a user can be automatically assigned to an appropriate splitter/cache server to reduce the load on an original server. Therefore, a high quality service can be provided with labor saved and efficiently billing a user and a truster.

The appended computer program claims are to be interpreted as covering a computer program by itself, or as a record on a carrier, or as a signal, or in any other form.

## Claims

1. A contents delivery network method for delivering to a user a copy of original contents stored in one of a plurality of servers, each server (8) holding a copy of the original contents instead of the original contents by distributing the servers to geographically different areas, the method comprising:
obtaining an area of a user according to a user IP address;
storing an address of each of the servers (8) holding a copy of the original contents and area information about the servers; and
obtaining an address of a server (8) to be used according to the obtained area of the user; **characterised by** further comprising:
an authentication server notifying a user of a one-time password and an address of a server to be used depending on a use when the user tries access.

2. The method according to claim 1, further comprising:
detecting a use of a user such that when the user refers to data, the user is allowed to access the server (8) holding the copy of the original contents, and when the data is amended, the server is allowed to access the original contents.

3. The method according to claim 1 or 2, further comprising:
measuring a transmission line available band between a server to be used by the user and a terminal to be used by the user, and determining whether or not a communications speed condition defined by the service is satisfied; and
delivering the contents to the terminal of the user by the server (8) to be used depending on the use when the communications speed condition is satisfied as a result of the determination.

4. The method according to any of the preceding claims, further comprising:
in delivering the contents, billing the user and the truster of delivering the contents depending on service quality based on a use record and an available band of a transmission line.

5. A contents delivery network system for delivering to a user a copy of original contents stored in one of a plurality of servers, each server holding a copy of the original contents instead of the original contents by distributing the servers to geographically different areas, comprising:
means for obtaining an area of a user according to a user IP address;
storage means for storing an address of each of the servers holding a copy of the original contents and area information about the servers; and
means for obtaining an address of a server to be used according to the obtained area of the user; **characterized in that** it further comprises:
notifying means of an authentication server notifying a user of a one-time password and an address of a server to be used depending on a use when the user tries access.

6. The system according to claim 5, further comprising:
a user use detection means for detecting a use of a user such that when the user refers to data, the user is allowed to access the server holding the copy of the original contents, and when the data is amended, the server is allowed to access the original contents.

7. The system according to claim 5 or 6, further comprising:
determination means of the user for measuring a transmission line available band between a server to be used by the user and a terminal to be used by the user, and determining whether or not a communications speed condition defined by the service is satisfied; and
means for delivering the contents to the terminal of the user by the server to be used depending on the use when the communications speed condition is satisfied as a result of the determination.

8. The system according to claim 5, 6 or 7 further comprising:
means for, in delivering the contents, billing the user and the truster of delivering the contents depending on service quality based on a use record and an available band of a transmission line.

9. A computer program used to direct a computer to perform a method comprising:
obtaining an area of a user according to a user IP address;
storing an address of each of a plurality of servers (8) holding a copy of the original contents and area information about the servers; and
obtaining an address of a server (8) to be used according to the obtained area of the user; **characterized by** further comprising:
an authentication server notifying a user of a one-time password and an address of a server to be used depending on a use when the user tries access.

10. The program according to claim 9, the method further comprising:
detecting a use of a user such that when the user refers to data, the user is allowed to access the server holding the copy of the original contents, and when the data is amended, the server is allowed to access the original contents.

11. The program according to claim 9 or 10, the method further comprising:
measuring a transmission line available band between a server to be used by the user and a terminal to be used by the user, and determining whether or not a communications speed condition defined by the service is satisfied; and
delivering the contents to the terminal of the user by the server to be used depending on the use when the communications speed condition is satisfied as a result of the determination.

12. The program according to any of claims 9 to 11, the method further comprising:
in delivering the contents, billing the user and the truster of delivering the contents depending on service quality based on a use record and an available band of a transmission line.

## Patentansprüche

1. Inhaltbereitstellungsnetzwerkverfahren zum Bereitstellen einer Kopie des Originalinhaltes, die in einer von einer Vielzahl von Servern gespeichert ist, für einen Nutzer, wobei jeder Server (8) eine Kopie des Originalinhaltes anstelle des Originalinhaltes durch das Verteilen der Server an geographisch verschiedene Gebiete hält, welches Verfahren umfasst:
Erhalten eines Gebietes eines Nutzers gemäß einer Nutzer-IP-Adresse;
Speichern einer Adresse von jedem der Server (8), die eine Kopie des Originalinhaltes halten, und von Gebietsinformationen über die Server; und
Erhalten einer Adresse eines Servers (8), der gemäß dem erhaltenen Gebiet des Nutzers zu verwenden ist; **dadurch gekennzeichnet, dass** es ferner umfasst:
einen Authentifizierungsserver, der einem Nutzer ein einmaliges Passwort und eine Adresse eines Servers mitteilt, der in Abhängigkeit von einem Gebrauch zu verwenden ist, wenn der Nutzer den Zugriff probiert.

2. Verfahren nach Anspruch 1, ferner mit:
Detektieren eines Gebrauchs durch einen Nutzer, so dass dann, wenn der Nutzer auf Daten Bezug nimmt, dem Nutzer der Zugriff auf den Server (8) erlaubt wird, der die Kopie des Originalinhaltes hält, und wenn die Daten geändert werden, dem Server erlaubt wird, auf den Originalinhalt zuzugreifen.

3. Verfahren nach Anspruch 1 oder 2, ferner mit:
Messen eines verfügbaren Bandes einer Übertragungsleitung zwischen einem Server, der durch den Nutzer zu verwenden ist, und einem Terminal, das durch den Nutzer zu verwenden ist, und Bestimmen, ob eine Kommunikationsgeschwindigkeitsbedingung, die durch den Dienst definiert ist, erfüllt ist oder nicht; und
Bereitstellen des Inhaltes für das Terminal des Nutzers durch den Server (8), der in Abhängigkeit von dem Gebrauch zu verwenden ist, wenn die Kommunikationsgeschwindigkeitsbedingung als Resultat der Bestimmung erfüllt ist.

4. Verfahren nach einem der vorhergehenden Ansprüche, ferner umfassend:
beim Bereitstellen des Inhaltes, Gebührenberechnung für den Nutzer und den Gläubiger für das Bereitstellen des Inhaltes in Abhängigkeit von der Dienstqualität auf der Basis eines Gebrauchsprotokolls und eines verfügbaren Bandes einer Übertragungsleitung.

5. Inhaltbereitstellungsnetzwerksystem zum Bereitstellen einer Kopie eines Originalinhaltes, die in einem von einer Vielzahl von Servern gespeichert ist, für einen Nutzer, wobei jeder Server eine Kopie des Originalinhaltes anstelle des Originalinhaltes durch das Verteilen der Server an geographisch verschiedene Gebiete hält, das umfasst:
ein Mittel zum Erhalten eines Gebietes eines Nutzers gemäß einer Nutzer-IP-Adresse;
ein Speichermittel zum Speichern einer Adresse von jedem der Server, die eine Kopie des Originalinhaltes halten, und von Gebietsinformationen über die Server; und
ein Mittel zum Erhalten einer Adresse eines Servers, der gemäß dem erhaltenen Gebiet des Nutzers zu verwenden ist; **dadurch gekennzeichnet, dass** es ferner umfasst:
ein Mitteilungsmittel eines Authentifizierungsservers, das einem Nutzer ein einmaliges Passwort und eine Adresse eines Servers mitteilt, der in Abhängigkeit von einem Gebrauch zu verwenden ist, wenn der Nutzer den Zugriff probiert.

6. System nach Anspruch 5, ferner mit:
einem Nutzergebrauchsdetektionsmittel zum Detektieren eines Gebrauchs durch einen Nutzers, so dass dann, wenn der Nutzer auf Daten Bezug nimmt, dem Nutzer der Zugriff auf den Server erlaubt wird, der die Kopie des Originalinhaltes hält, und wenn die Daten geändert werden, dem Server erlaubt wird, auf den Originalinhalt zuzugreifen.

7. System nach Anspruch 5 oder 6, ferner mit:
einem Bestimmungsmittel des Nutzers zum Messen eines verfügbaren Bandes einer Übertragungsleitung zwischen einem Server, der durch den Nutzer zu verwenden ist, und einem Terminal, das durch den Nutzer zu verwenden ist, und zum Bestimmen, ob eine Kommunikationsgeschwindigkeitsbedingung, die durch den Dienst definiert ist, erfüllt ist oder nicht; und
einem Mittel zum Bereitstellen des Inhaltes für das Terminal des Nutzers durch den Server, der in Abhängigkeit von dem Gebrauch zu verwenden ist, wenn die Kommunikationsgeschwindigkeitsbedingung als Resultat der Bestimmung erfüllt ist.

8. System nach Anspruch 5, 6 oder 7, ferner mit:
einem Mittel zur Gebührenberechnung, beim Bereitstellen des Inhaltes, für den Nutzer und den Gläubiger für das Bereitstellen des Inhaltes in Abhängigkeit von der Dienstqualität auf der Basis eines Gebrauchsprotokolls und eines verfügbaren Bandes einer Übertragungsleitung.

9. Computerprogramm, das verwendet wird, um einen Computer anzuweisen, ein Verfahren auszuführen, das umfasst:
Erhalten eines Gebietes eines Nutzers gemäß einer Nutzer-IP-Adresse;
Speichern einer Adresse von jedem von einer Vielzahl von Servern (8), die eine Kopie des Originalinhaltes halten, und von Gebietsinformationen über die Server; und
Erhalten einer Adresse eines Servers (8), der gemäß dem erhaltenen Gebiet des Nutzers zu verwenden ist; **dadurch gekennzeichnet, dass** es ferner umfasst:
einen Authentifizierungsserver, der einem Nutzer ein einmaliges Passwort und eine Adresse eines Servers mitteilt, der in Abhängigkeit von einem Gebrauch zu verwenden ist, wenn der Nutzer den Zugriff probiert.

10. Programm nach Anspruch 9, welches Verfahren ferner umfasst:
Detektieren eines Gebrauchs durch einen Nutzer, so dass dann, wenn der Nutzer auf Daten Bezug nimmt, dem Nutzer der Zugriff auf den Server erlaubt wird, der die Kopie des Originalinhaltes hält, und wenn die Daten geändert werden, dem Server erlaubt wird, auf den Originalinhalt zuzugreifen.

11. Programm nach Anspruch 9 oder 10, welches Verfahren ferner umfasst:
Messen eines verfügbaren Bandes einer Übertragungsleitung zwischen einem Server, der durch den Nutzer zu verwenden ist, und einem Terminal, das durch den Nutzer zu verwenden ist, und Bestimmen, ob eine Kommunikationsgeschwindigkeitsbedingung, die durch den Dienst definiert ist, erfüllt ist oder nicht; und
Bereitstellen des Inhaltes für das Terminal des Nutzers durch den Server, der in Abhängigkeit von dem Gebrauch zu verwenden ist, wenn die Kommunikationsgeschwindigkeitsbedingung als Resultat der Bestimmung erfüllt ist.

12. Programm nach einem der Ansprüche 9 bis 11, welches Verfahren ferner umfasst:
beim Bereitstellen des Inhaltes, Gebührenberechnung für den Nutzer und den Gläubiger für das Bereitstellen des Inhaltes in Abhängigkeit von der Dienstqualität auf der Basis eines Gebrauchsprotokolls und eines verfügbaren Bandes einer Übertragungsleitung.

## Revendications

1. Procédé en réseau de délivrance de contenus pour délivrer à un utilisateur une copie de contenus originaux qui est stockée dans l'un d'une pluralité de serveurs, chaque serveur (8) contenant une copie des contenus originaux en lieu et place des contenus originaux en distribuant les serveurs sur des zones géographiquement différentes, le procédé comprenant :
l'obtention d'une zone d'un utilisateur conformément à une adresse IP d'utilisateur ;
le stockage d'une adresse de chacun des serveurs (8) contenant une copie des contenus originaux et d'une information de zone concernant les serveurs ; et
l'obtention d'une adresse d'un serveur (8) destiné à être utilisé conformément à la zone obtenue de l'utilisateur,
**caractérisé en ce qu'**il comprend en outre :
un serveur d'authentification qui notifie à un utilisateur un mot de passe pour une seule fois et une adresse d'un serveur destiné à être utilisé en fonction d'une utilisation lorsque l'utilisateur tente un accès.

2. Procédé selon la revendication 1, comprenant en outre :
la détection d'une utilisation d'un utilisateur de telle sorte que lorsque l'utilisateur se réfère à des données, l'utilisateur soit autorisé à accéder au serveur (8) qui contient la copie des contenus originaux et que lorsque les données sont amendées, le serveur soit autorisé à accéder aux contenus originaux.

3. Procédé selon la revendication 1 ou 2, comprenant en outre :
la mesure d'une bande disponible d'une ligne de transmission entre un serveur destiné à être utilisé par l'utilisateur et un terminal destiné à être utilisé par l'utilisateur et la détermination de si oui ou non une condition de vitesse de communication définie par le service est satisfaite ; et
la délivrance des contenus sur le terminal de l'utilisateur par le serveur (8) destiné à être utilisé en fonction de l'utilisation lorsque la condition de vitesse de communication est satisfaite en tant que résultat de la détermination.

4. Procédé selon l'une quelconque des revendications précédentes, comprenant en outre :
lors de la délivrance des contenus, la facturation de l'utilisateur et du responsable de délivrance des contenus en fonction d'une qualité de service qui est basée sur un enregistrement d'utilisation et sur une bande disponible d'une ligne de transmission.

5. Système en réseau de délivrance de contenus pour délivrer à un utilisateur une copie de contenus originaux qui est stockée dans l'un d'une pluralité de serveurs, chaque serveur contenant une copie des contenus originaux en lieu et place des contenus originaux en distribuant les serveurs sur des zones géographiquement différentes, comprenant :
un moyen pour obtenir une zone d'un utilisateur conformément à une adresse IP d'utilisateur ;
un moyen de stockage pour stocker une adresse de chacun des serveurs contenant une copie des contenus originaux et une information de zone concernant les serveurs ; et
un moyen pour obtenir une adresse d'un serveur destiné à être utilisé conformément à la zone obtenue de l'utilisateur,
**caractérisé en ce qu'**il comprend en outre :
un moyen de notification d'un serveur d'authentification qui notifie à un utilisateur un mot de passe pour une seule fois et une adresse d'un serveur destiné à être utilisé en fonction d'une utilisation lorsque l'utilisateur tente un accès.

6. Système selon la revendication 5, comprenant en outre :
un moyen de détection d'utilisation d'utilisateur pour détecter une utilisation d'un utilisateur de telle sorte que lorsque l'utilisateur se réfère à des données, l'utilisateur soit autorisé à accéder au serveur qui contient la copie des contenus originaux et que lorsque les données sont amendées, le serveur soit autorisé à accéder aux contenus originaux.

7. Système selon la revendication 5 ou 6, comprenant en outre :
un moyen de détermination de l'utilisateur pour mesurer une bande disponible de ligne de transmission entre un serveur destiné à être utilisé par l'utilisateur et un terminal destiné à être utilisé par l'utilisateur et pour déterminer si oui ou non une condition de vitesse de communication définie par le service est satisfaite ; et
un moyen pour délivrer les contenus sur le terminal de l'utilisateur au moyen du serveur destiné à être utilisé en fonction de l'utilisation lorsque la condition de vitesse de communication est satisfaite en tant que résultat de la détermination.

8. Système selon la revendication 5, 6 ou 7, comprenant en outre :
un moyen pour, lors de la délivrance des contenus, facturer l'utilisateur et le responsable de délivrance des contenus en fonction d'une qualité de service qui est basée sur un enregistrement d'utilisation et sur une bande disponible d'une ligne de transmission.

9. Programme d'ordinateur utilisé pour diriger un ordinateur afin de réaliser un procédé comprenant :
l'obtention d'une zone d'un utilisateur conformément à une adresse IP d'utilisateur ;
le stockage d'une adresse de chacun d'une pluralité de serveurs (8) contenant une copie des contenus originaux et d'une information de zone concernant les serveurs ; et
l'obtention d'une adresse d'un serveur (8) destiné à être utilisé conformément à la zone obtenue de l'utilisateur, **caractérisé en ce qu'**il comprend en outre :
un serveur d'authentification qui notifie à un utilisateur un mot de passe pour une seule fois et une adresse d'un serveur destiné à être utilisé en fonction d'une utilisation lorsque l'utilisateur tente un accès.

10. Programme selon la revendication 9, le procédé comprenant en outre :
la détection d'une utilisation d'un utilisateur de telle sorte que lorsque l'utilisateur se réfère à des données, l'utilisateur soit autorisé à accéder au serveur qui contient la copie des contenus originaux et que lorsque les données sont amendées, le serveur soit autorisé à accéder aux contenus originaux.

11. Programme selon la revendication 9 ou 10, le procédé comprenant en outre :
la mesure d'une bande disponible de ligne de transmission entre un serveur destiné à être utilisé par l'utilisateur et un terminal destiné à être utilisé par l'utilisateur et la détermination de si oui ou non une condition de vitesse de communication définie par le service est satisfaite ; et
la délivrance des contenus sur le terminal de l'utilisateur par le serveur destiné à être utilisé en fonction de l'utilisation lorsque la condition de vitesse de communication est satisfaite en tant que résultat de la détermination.

12. Programme selon l'une quelconque des revendications 9 à 11, le procédé comprenant en outre :
lors de la délivrance des contenus, la facturation de l'utilisateur et du responsable de délivrance des contenus en fonction d'une qualité de service qui est basée sur un enregistrement d'utilisation et sur une bande disponible d'une ligne de transmission.
